## Europäisches Patentamt

### European Patent Office
### Office européen des brevets

(11) Veröffentlichungsnummer: **0 070 460**
**B1**

(12) # EUROPÄISCHE PATENTSCHRIFT

(45) Veröffentlichungstag der Patentschrift:
16.09.87

(51) Int. Cl.⁴: **G 01 D 5/251**

(21) Anmeldenummer: **82106101.7**

(22) Anmeldetag: **08.07.82**

(54) Elektroauto-Sollwertgeber.

(30) Priorität: **11.07.81 DE 3127459**

(43) Veröffentlichungstag der Anmeldung:
**26.01.83 Patentblatt 83/4**

(45) Bekanntmachung des Hinweises auf die Patenterteilung:
**16.09.87 Patentblatt 87/38**

(84) Benannte Vertragsstaaten:
**AT BE CH FR GB IT LI NL SE**

(56) Entgegenhaltungen:
**DE - A - 2 018 277**
**DE - A - 2 744 649**
**DE - A - 2 903 614**

**RICHTER-V. VOSS "Bauelemente der Feinmechanik",
4. Auflage, 1949, VERLAG TECHNIK GMBH, Berlin NW7,
Seiten 344-353**

(73) Patentinhaber: **BROWN, BOVERI & CIE
Aktiengesellschaft, Kallstadter Strasse 1,
D-6800 Mannheim 31 (DE)**

(72) Erfinder: **Kahlen, Hans, Dr. Dr.-Ing., Holbeinstrasse 11,
D-6940 Weinheim-Sulzbach (DE)**
Erfinder: **Kinzel, Helmut, Ing.grad., Lärchenweg 20,
D-6940 Weinheim (DE)**

(74) Vertreter: **Kempe, Wolfgang, Dr. et al, c/o BROWN,
BOVERI & CIE AG ZPT Postfach 351,
D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen elektrischen Sollwertgeber für Autos gemäss dem Oberbegriff des Anspruches 1.

Derartige Sollwertgeber werden beispielsweise für die Steuerung elektrischer Fahrzeuge eingesetzt und zwar zur Sollwertvorgabe von Geschwindigkeiten, Drehzahlen, Drehmomenten oder Strömen.

Ein derartiger elektrischer Sollwertgeber für Autos ist aus der DE-A-2 903 614 bekannt. Dabei liegt in Serie zu jedem Schaltkontakt ein weiterer Widerstand. Die von den Schaltkontakten abgewandten Enden aller weiteren Widerstände sind miteinander verbunden und bilden den Ausgang des Sollwertgebers. Die Anzahl der Schaltkontakte ist geringer als die Anzahl der Abstufungen der Ausgangsspannung. Der Sollwertgeber ist eigensicher, d.h. bei Nullstellung des Sollwertgebers tritt auch bei einer Unterbrechung der Verbindungsleitung zwischen dem Fusspunkt des Spannungsteilers und dem Bezugspotential am Ausgang kein Spannungswert auf. Bei diesem bekannten elektrischen Sollwertgeber ist jedoch der Verstellweg zur Ansteuerung der Schaltkontakte schlecht an einen Betätigungsweg (z.B. Pedal bei einem Auto) anzupassen.

Aus der DE-A-2 744 649 ist ein elektrischer Eich- und Abgleichfestwertgeber bekannt, bei dem magnetisch betätigbare Schutzgas-Schaltkontakte auf einer Schaltplatine kreisförmig, radial von einem Zentrum ausgehend, angeordnet sind und durch einen relativ zu dieser Anordnung drehbaren, auf einem als Geberarm ausgebildeten Magnetträger angeordneten Dauermagneten berührungslos geöffnet oder geschlossen werden. An diese Kontakte ist eine Reihenschaltung von Widerständen angeschlossen, deren aufaddierte Werte bis zum geschalteten Kontakt dem jeweils geforderten Widerstandwert entsprechen.

Dieser Eich- und Abgleichfestwertgeber kann in der offenbarten Form jedoch nicht als Sollwertgeber für Geschwindigkeiten etc. bei einem Auto eingesetzt werden, da nicht ausgeführt ist, wie eine Anpassung des Verstellweges zur Ansteuerung der Schaltkontakte an einen vorgegebenen Pedalweg bei einem Auto erfolgen soll. Ferner ist es nachteilig, dass durch zusätzliche Dauermagnete berührungslose, magnetisch fixierte Raststellungen gebildet werden.

Aus der DE-A-2 018 277 sind regelbare Widerstände bekannt, bei denen eine Magneteinheit an einer Abgreifeinrichtung ein Feld erzeugt, das jeweils einen oder mehrere auf einer Montageplatte befestigte Magnetschalter betätigt. Die Montageplatte kann eine zylindrische Form aufweisen, wobei die Magneteinheit um die Achse des Zylinders drehbar gelagert ist. Nachteilig dabei ist, dass die elektrisch empfindlichen Bauteile nicht wirksam geschützt sind. Eine Anpassung des Pedalweges bei einem Auto an den Verstellweg zur Ansteuerung der Schaltkontakte ist nicht ausgeführt.

Der Erfindung liegt die Aufgabe zugrunde, einen bei Autos verwendbaren elektrischen Sollwertgeber der eingangs genannten Art zur Vorgabe von Geschwindigkeiten, Drehzahlen, Drehmomenten oder Strömen zu schaffen, bei dem eine Anpassung des Verstellweges an einen vorgegebenen Pedalweg in einfacher Weise möglich ist.

Diese Aufgabe wird durch die im Anspruch 1 angegebenen Merkmale gelöst.

Vorteilhafte Ausgestaltungen der Erfindung sind in den abhängigen Ansprüchen gekennzeichnet.

Die mit der Erfindung erzielbaren Vorteile bestehen insbesondere darin, dass der elektrische Sollwertgeber mit geringem Fertigungsaufwand herstellbar ist, verschleissfrei arbeitet und eigensicher ist. Die Winkeldrehung ist leicht in einen geforderten Betätigungsweg für das Pedal bei einem Auto umwandelbar. Zudem sind nur zwei Anschlüsse erforderlich, die beliebig vertauscht werden können. Eine Kennzeichnung der Leitungen ist deshalb nicht erforderlich.

Ein Ausführungsbeispiel der Erfindung ist nachfolgend anhand der Zeichnungen erläutert.

Es zeigen:

Fig. 1 ein Prinzipschaltbild des elektrischen Sollwertgebers,

Fig. 2 ein elektrisches Ersatzschaltbild des Sollwertgebers,

Fig. 3 den mechanischen Aufbau des Sollwertgebers.

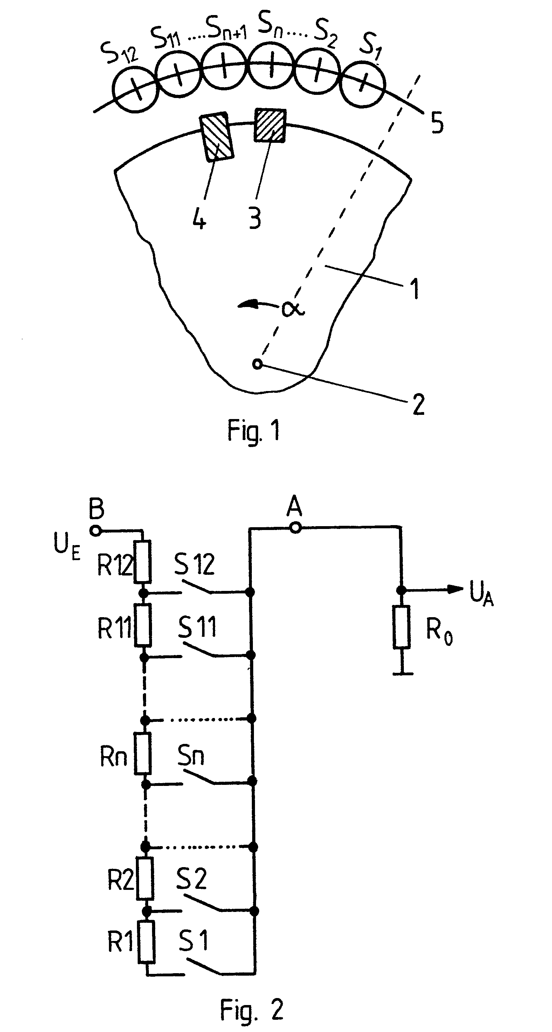

In Fig. 1 ist ein Prinzipschaltbild des elektrischen Sollwertgebers dargestellt. Ein Magnetträger 1 ist um eine Drehachse 2 beweglich ausgebildet. Am Rand des Magnetträgers 1 sind ein Dauermagnet 3 und ein magnetischer Nebenschluss 4 angebracht. Auf einem dem Magnetträger 1 gegenüber befindlichen, feststehenden Kreissegment 5 sind Schutzgas-Schaltkontakte (Reedkontakte) $S1, S2 \ldots Sn, Sn+1 \ldots S11, S12$ kreisbogenförmig angeordnet (n = beliebige Zahl). Der Drehwinkel des beweglichen Magnetträgers 1 um die Drehachse 2 ist mit $\alpha$ bezeichnet.

In Fig. 2 ist ein elektrisches Ersatzschaltbild des Sollwertgebers dargestellt. Der Sollwertgeber wird mit einer Versorgungsspannung (Eingangsspannung) $U_E$ am Punkt B beaufschlagt. Mit dem Punkt B ist eine Reihenschaltung von Widerständen $R1, R2 \ldots Rn, \ldots R11, R12$ verbunden. Der Widerstand $R12$ liegt dabei am Punkt B. Jeweils an den gemeinsamen Verbindungspunkt zwischen zwei Widerständen ist ein Schutzgas-Schaltkontakt $S1 \ldots S12$ angeschlossen. Am Verbindungspunkt zwischen den Widerständen $R12$ und $R11$ liegt der Schaltkontakt $S12$ mit seinem ersten Anschluss, am Verbindungspunkt zwischen $R11$ und $R10$ liegt $S11$ mit seinem ersten Anschluss, am Verbindungspunkt zwischen $R2$ und $R1$ liegt $S2$ und am freien Ende von $R1$ liegt $S1$. Die Schutzgas-Schaltkontakte $S1, S2 \ldots Sn \ldots S11, S12$ sind mit ihren zweiten Anschlüssen untereinander und über eine gemeinsame Leitung mit einem Punkt A verbunden. Am Punkt A ist die Ausgangsspannung $U_A$ des elektrischen Sollwertgebers abgreifbar. Punkt A ist über einen Festwiderstand $R_0$ mit Massepotential verbunden, wobei vorausgesetzt wird, dass die mit dem Punkt B verbundene einspeisende Spannungsquelle ebenfalls an das Massepotential angeschlossen ist.

Der elektrische Sollwertgeber eignet sich als Stellglied zur Sollwertvorgabe für die Fahrgeschwindigkeit und die Bremskraft eines Elektrospeicher-Fahrzeuges. Wie aus dem praktischen Fahrbetrieb ermittelt wurde, genügt eine Sollwertvorgabe in Stufen von 8 bis 10% des höchsten Sollwertes, d.h. $n \approx 10-12$. Über die Drehachse 2 kann eine Pedalbewegung günstig in eine Drehbewegung des Magnetträgers 1 umgesetzt werden. Bei einem 10- bis 12-stufigen Sollwertgeber ist dabei eine 90°-Drehbewegung des Magnetträgers 1 von einem Anschlag zum anderen Anschlag besonders vorteilhaft.

Der Sollwertgeber für die Fahrgeschwindigkeit enthält eine eingebaute Rückstellfeder, die den Magnetträger 1 selbsttätig in die Grundstellung, in der alle Schaltkontakte S1 . . . S12 geöffnet sind, bringt. In der Grundstellung befindet sich der Dauermagnet 3 rechts vom Schaltkontakt S1 (siehe Fig. 1).

Der Sollwertgeber für die Bremskraft enthält ebenfalls eine eingebaute Rückstellfeder, die den Magnetträger jedoch selbsttätig in die Endstellung, in der der Schaltkontakt S12 angesteuert wird, bringt.

Nachfolgend wird die Funktionsweise des elektrischen Sollwertgebers zur Sollwertvorgabe für die Fahrgeschwindigkeit erläutert:

Die Schutzgas-Schaltkontakte S1 . . . S12 werden vom Dauermagneten 3 angesteuert, der auf dem Magnetträger 1 auf einem Kreisbogen an den Schaltkontakten S1 . . . . S12 vorbeigeführt wird. In der Grundstellung des elektrischen Sollwertgebers liegt der Dauermagnet 3 rechts unterhalb des Schutzgas-Schaltkontaktes S1, und es wird kein Schaltkontakt angesteuert. In der Grundstellung kann bei beliebigem Aderbruch kein Sollwert vom elektrischen Sollwertgeber abgegeben werden. Der Sollwertgeber ist damit für den Fahrbetrieb eigensicher.

Der elektrische Sollwertgeber ist im Prinzipschaltbild als Stellwiderstand mit einer Unterteilung in 12 Stufen bei 90°-Drehbewegung von Anschlag zu Anschlag ausgeführt. Bei leichtem Pedaldruck und einer 7,5°-Drehbewegung des Magnetträgers 1 gegenüber dem feststehenden Kreissegment 5 liegt der Dauermagnet 3 genau unter dem Schutzgas-Schaltkontakt S1 des Kreissegmentes 5. Der Schaltkontakt S1 wird geschlossen. Dadurch werden die Widerstände

$$R = \sum_{i=1}^{12} Ri$$

mit dem Festwiderstand $R_0$ in Reihe geschaltet. Der Festwiderstand $R_0$ bildet mit den Widerständen $\sum Ri$ einen Spannungsteiler mit dem Abgriff am Punkt A.

Bei verstärktem Pedaldruck und einer 15°-Drehbewegung des Magnetträgers 1 gegenüber dem feststehenden Kreissegment 5 liegt der Dauermagnet 3 genau unter dem Schutzgas-Schaltkontakt S2 des Kreissegmentes 5. Der Schaltkontakt S2 wird geschlossen, während S1 wieder geöffnet wird. Dadurch werden die Widerstände

$$R = \sum_{i=2}^{12} Ri$$

mit dem Festwiderstand $R_0$ in Reihe geschaltet.

Bei weiter verstärktem Pedaldruck und einer 22,5°-Drehbewegung des Magnetträgers 1 liegt der Dauermagnet 3 genau unter dem Schutzgas-Schaltkontakt S3 des Kreissegmentes 5. Der Schaltkontakt S3 wird geschlossen, während S2 wieder geöffnet wird. Es ist nur noch die Serienschaltung der Widerstände

$$R = \sum_{i=3}^{12} Ri$$

mit dem Festwiderstand $R_0$ im Einsatz.

Bei weiter verstärktem Pedaldruck und weiterer Drehung des Magnetträgers 1 um die Drehachse 2 werden sukzessive die weiteren Schaltkontakte S4, S5 . . . . S11 geschlossen. Bei maximalem Pedaldruck und 90°-Drehbewegung (= Endstellung des Magnetträgers 1 gegenüber dem Kreissegment 5) wird der Schaltkontakt S12 geschlossen, und der Spannungsteiler besteht lediglich aus den Widerständen R12 und $R_0$ mit Abgriff im Punkt A.

Für die Widerstände werden Widerstandswerte entsprechend einer vorgebbaren Stufung verwendet. Somit können mit dem elektrischen Sollwertgeber beliebige Kennlinien $U_A = f(\alpha)$ durch geeignete Widerstandsbestückung hergestellt werden. Es ist kein Abgleich erforderlich. Das bei jeder beliebigen Stellung des Magnetträgers 1 abgegebene Ausgangssignal $U_A$ is stets reproduzierbar.

Zur Verkleinerung der Hysterese der Schutzgas-Schaltkontakte S1 . . . S12 ist auf dem Magnetträger 1 in geringem Abstand neben dem steuernden Dauermagneten 3 ein magnetischer Nebenschluss 4 angebracht. Dieser Nebenschluss 4 liegt in Bewegungsrichtung von S1 nach S12 vor dem Dauermagneten 3.

Mittels des elektrischen Sollwertgebers können Sollwerte für Geschwindigkeiten, Drehzahlen, Drehmomente oder Ströme vorgegeben werden, wobei der gleiche Geber verwendbar ist.

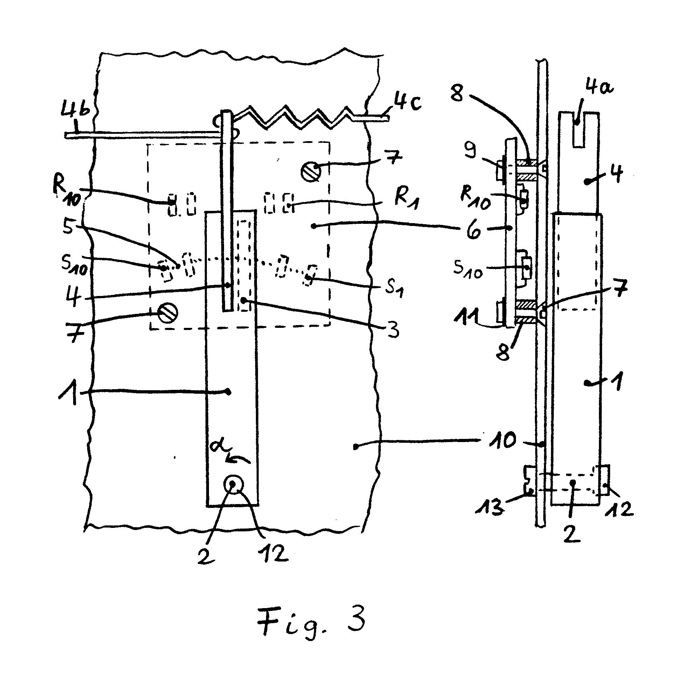

In Fig. 3 ist der mechanische Aufbau des elektrischen Sollwertgebers dargestellt, und zwar als Aufsicht- und Schnittzeichnung. Der Magnetträger 1 ist als stabförmiger Geberarm aus einem nichtmagnetischen Material, beispielsweise Aluminium, ausgebildet. Der Magnetträger 1 ist an seinem einen Ende mit einer Bohrung zur Aufnahme der Drehachse 2 versehen. An seinem entgegengesetzten, gabelförmig gestalteten Ende trägt er den Dauermagneten 3. Zur Aufnahme des Dauermagneten 3 besitzt der Magnetträger 1 vorzugsweise eine Bohrung, in die der Magnet 3 eingeklebt wird.

Der durch die gabelförmige Ausbildung des Magnetträgers 1 entstehende mittlere Einschnitt (Lücke) dient zur Aufnahme des stabförmigen magnetischen Nebenschlusses 4. Der magnetische Nebenschluss 4 (aus Weicheisen) wird in den Einschnitt (Lücke) des Magnetträgers 1 eingeklebt und überragt diesen. An seinem den Magnetträger 1 überragenden Ende besitzt der magnetische Nebenschluss 4 einen Aufnahmeschlitz 4a zum Einhängen eines Bowdenzuges 4b mit Zugrichtung zur einen Seite und einer Feder 4c (Rückstellfeder) mit Zugrichtung zur entgegengesetzten Seite. Bei der Darstellung gemäss Fig. 3 handelt es sich um einen Sollwertgeber für die Fahrgeschwindigkeit; zur Schaffung eines Sollwertgebers für die Bremskraft müssen die Angriffsrichtungen von Bowdenzug 4b und Feder 4c vertauscht werden. Der Bowdenzug 4b ist am beweglichen «Gaspedal» bzw. am «Bremspedal» des Fahrzeuges befestigt, während die Feder 4c fest mit einem Karosserieteil verbunden ist.

Die Schutzgas-Schaltkontakte S1, S2 ... Sn (im Ausführungsbeispiel gemäss Fig. 3: n = 10) sind in Form des Kreissegmentes 5 flach auf einer Leiterplatte 6 angeordnet. Die Leiterplatte 6 trägt des weiteren die Widerstände R1, R2 ... Rn (im Ausführungsbeispiel n = 10) sowie den Festwiderstand $R_0$.

Die Leiterplatte 6 (Bestückungsplatine) ist mittels zweier Senkkopfschrauben 7, zwischengelegter Distanzhülsen 8 und zur Verschraubung dienender Muttern 9 mit einem Gehäuse 10 fest verbunden, und zwar liegt die Leiterplatte im Gehäuseinneren. Zwischen den Muttern 9 und der Leiterplatte 6 können Unterlegscheiben 11 vorgesehen sein. Das Gehäuse 10 besteht aus nichtmagnetischem Material, beispielsweise Aluminium. Die Schutzgas-Schaltkontakte $S_1$ .... $S_n$ liegen sehr eng an der Gehäuseinnenwandung an, um ein sicheres Schalten der Schaltkontakte S1 ... Sn bei sich bewegendem Geberarm 1 zu gewährleisten. Der Dauermagnet 3 und auch der magnetische Nebenschluss 4 bewegen sich über dem durch die Schaltkontakte S1 .... Sn gebildeten Kreissegment 5 auf der Aussenseite des Gehäuses 10. Die Gehäuseinnenwandung kann zur elektrischen Isolierung am Ort der Schaltkontakte S1 ... Sn mit einer Kunststoffolie beschichtet oder belegt sein.

Der Magnetträger 1 ist über die Drehachse 2 mit dem Gehäuse 10 verbunden. Die Drehachse 2 ist beispielsweise als Einziehmutter 12 mit Zylinderkopfschraube 13 ausgebildet und stimmt mit dem gedachten Mittelpunkt des Kreissegmentes 5 der Schutzgas-Schaltkontakte überein.

Die Funktionsweise des elektrischen Sollwertgebers gemäss Fig. 3 ist wie vorstehend unter den Fig. 1 und 2 beschrieben. Ein Vorteil ist, dass die Herstellung, insbesondere eine Massenfertigung einfach und preiswert möglich ist. Ferner ist die bestückte Leiterplatte 6 staub- und wassergeschützt im Gehäuse 10 untergebracht.

**Patentansprüche**

1. Zur Verwendung in einem Auto bestimmter elektrischer Sollwertgeber in Form eines aus diskreten Widerständen (R1 ... Rn) aufgebauten Spannungsteilers, an dem über magnetisch betätigbare Schutzgas-Schaltkontakte (S1 ... Sn) Teilspannungen abgreifbar sind, wobei die Schutzgas-Schaltkontakte (S1 ... Sn) durch einen beweglich angeordneten Dauermagneten (3) mit magnetischem Nebenschluss (4) so ansteuerbar sind, dass stets nur ein Schaltkontakt allein eingeschaltet ist und in Nullstellung alle Schaltkontakte (S1 ... Sn) geöffnet sind, gekennzeichnet durch eine Kombination folgender Merkmale:

– es ist ein Gehäuse (10) aus einem nichtmagnetischen Material als Schutz gegen Staub und Wasser vorgesehen, an dessen Aussenseite ein mit dem Dauermagneten (3) versehener und als Geberarm ausgebildeter Magnetträger (1) angeordnet und mit dem Gehäuse über eine Drehachse (2) verbunden ist,

– es sind zehn bis zwölf Schutzgas-Schaltkontakte (S1 ... Sn) vorgesehen, die in Form eines 90°-Kreissegmentes gleichmässig angeordnet und flach auf einer sich im Gehäuseinnern befindlichen und mit dem Gehäuse (10) fest verbundenen Leiterplatte (6) befestigt sind,

– der Dauermagnet (3) des Magnetträgers (1) überstreicht die Schaltkontakte (S1 ... Sn) kreisbogenförmig in einem 90°-Winkelbereich von Anschlag zu Anschlag,

– der magnetische Nebenschluss (4) ist direkt neben dem steuernden Dauermagneten (3) am Magnetträger (1) befestigt und mit einem Schlitz (4a) zum Einhängen eines Bowdenzuges (4b) und einer Rückstellfeder (4c) versehen,

– die Betätigung des Magnetträgers (1) mittels eines Pedals erfolgt durch den Bowdenzug (4b) mit Zugrichtung zur einen Seite, die Rückstellung durch die Rückstellfeder (4c) mit Zugrichtung zur entgegengesetzten Seite.

2. Elektrischer Sollwertgeber nach Anspruch 1, dadurch gekennzeichnet, dass der Magnetträger (1) eine Bohrung zum Einschieben und Einkleben des Dauermagneten (3) aufweist.

3. Elektrischer Sollwertgeber nach Anspruch 1, dadurch gekennzeichnet, dass der Magnetträger (1) an seinem beweglichen Ende gabelförmig ausgebildet ist und dass der dadurch entstehende mittlere Einschnitt zur Aufnahme des magnetischen Nebenschlusses (4) dient.

4. Elektrischer Sollwertgeber nach Anspruch 1, wobei die diskreten Widerstände (R1 ... Rn) in Serie geschaltet sind, der Endpunkt (B) der Serienschaltung mit einer Versorgungsspannung ($U_E$) beaufschlagt ist, der Anfangspunkt der Serienschaltung sowie jeder Verbindungspunkt zwischen zwei Widerständen jeweils mit dem ersten Anschluss des zugehörigen Schutzgas-Schaltkontaktes (S1 ... Sn) verbunden ist, und die zweiten Anschlüsse der Schutzgas-Schaltkontakte miteinander verbunden sind, dadurch gekennzeichnet, dass der gemeinsame Verbindungspunkt (A) der zweiten Anschlüsse der Schutzgas-Schaltkontakte (S1 ... Sn) über einen Festwiderstand ($R_0$) an Masse liegt und als Abgriff für den Sollwert dient.

**Claims**

1. Electric setpoint adjuster, intended for use in a car, in the form of a voltage divider which comprises discrete resistors (R1 ... Rn) and at which partial voltages can be picked off by means of magnetically operable dry-reed switch contacts (S1 ... Sn) the dry-reed switch contacts (S1 ... Sn) being capable of being actuated by means of a moving permanent magnet (3) with magnetic shunt (4) in such a way that only one switch contact is energized at a time and, in the neutral position, all switch contacts (S1 ... Sn) are open, characterized by a combination of the following features:

    – a housing (10) of a non-magnetic material is provided as protection against dust and water, on the outside of which is arranged a magnet holder (1), which is provided with the permanent magnet (3) and designed as adjuster arm and is connected to the housing via an axis of rotation (2),

    – ten to twelve dry-reed switch contacts (S1 ... Sn) are provided which are arranged evenly in the shape of a 90-degree circular segment and are fixed flat on a circuit board (6) located in the interior of the housing and firmly connected to the housing (10),

    – the permanent magnet (3) of the magnet holder (1) brushes over the switch contacts (S1 ... Sn) in the form of an arc over a 90° sector from stop to stop,

    – the magnetic shunt (4) is fixed directly alongside the controlling permanent magnet (3) on the magnet holder (1) and is provided with a slot (4a) for inserting a Bowden wire (4b) and a restoring spring (4c),

    – the operation of the magnet holder (1) by means of a pedal takes place by means of the Bowden wire (4b) with pulling direction to one side, return being effected by means of the restoring spring (4c) with pulling direction to the opposite side.

    2. Electric setpoint adjuster according to Claim 1, characterized in that the magnet holder (1) has a bore hole for pushing-in and adhesively retaining the permanent magnet (3).

    3. Electric setpoint adjuster according to Claim 1, characterized in that the magnet holder (1) is designed in the shape of a fork at its moving end and in that the central incision thereby produced is used for taking the magnetic shunt (4).

    4. Electric setpoint adjuster according to Claim 1, the discrete resistors (R1 ... Rn) being connected in series, the end point (B) of the series circuit having a supply voltage ($U_E$) applied to it, the starting point of the series circuit and each connecting point between two resistors being connected to the first terminal of the associated dry-reed switch contacts (S1 ... Sn) and the second terminals of the dry-reed switch contacts being connected to one another, characterized in that the joint connecting point (A) of the second terminals of the dry-reed switch contacts (S1 ... Sn) is connected to ground via a fixed resistor ($R_0$) and used as pick-off for the setpoint.

**Revendications**

1. Transmetteur électrique de valeur de consigne destiné à être utilisé dans un véhicule automobile et formé d'un diviseur de tension constitué par des résistances discrètes (R1 ... Rn) sur lequel des tensions partielles sont prélevables à travers des contacts de mise en circuit sous gaz protecteur (S1 ... Sn) actionnables magnétiquement, lesdits contacts de mise en circuit (S1 ... Sn) étant commandables par un aimant permanent (3) monté mobile avec dérivation magnétique (4) de telle façon qu'il n'y ait toujours qu'un seul contact à la fois à être branché et qu'en position zéro tous lesdits contacts (S1 ... Sn) soient ouverts, transmetteur de valeur de consigne caractérisé par une combinaison des particularités suivantes:

    – il existe en tant que protection contre la poussière et l'eau un carter (10) en un matériau amagnétique sur la face extérieure duquel un support d'aimant (1) muni de l'aimant permanent (3) et établi en bras transmetteur est disposé en étant relié audit carter par un axe de rotation (2);

    – on compte de 10 à 12 contacts de mise en circuit sous gaz protecteur (S1 ... Sn), lesquels sont disposés uniformément sous la forme d'un segment circulaire d'angle au centre 90° et fixes à plat sur une plaque à conducteurs (6) se trouvant à l'intérieur du carter (10) et reliée à demeure à ce dernier;

    – l'aimant permanent (3) du support d'aimant (1) se déplace en arc de cercle au-dessus des contacts de mise en circuit sous gaz protecteur (S1 ... Sn) dans un secteur de 90° de butée à butée;

    – la dérivation magnétique (4) est fixée directement à côté de l'aimant permanent de commande (3) sur le support d'aimant (1) et munie d'une fente (4a) pour la suspension d'un câble Bowden (4b) et d'un ressort de rappel (4c);

    – l'actionnement du support d'aimant (1) au moyen d'une pédale s'opère par le câble Bowden (4b), agissant en traction vers un côté, et le retour par le ressort de rappel (4c), agissant en traction vers l'autre côté.

    2. Transmetteur électrique de valeur de consigne selon la revendication 1 caractérisé par le fait que le support d'aimant (1) comporte un alésage dans lequel on insère et colle l'aimant permanent (3).

    3. Transmetteur électrique de valeur de consigne selon la revendication 1 caractérisé par le fait que le support d'aimant (1) est établi en forme de fourche sur son extrémité mobile et l'entaille médiane ainsi créée est destinée à recevoir la dérivation magnétique (4).

    4. Transmetteur électrique de valeur de consigne selon la revendication 1, dans lequel les résistances discrètes (R1 ... Rn) sont montées en série, le poids final (B) de ce montage série est soumis à une tension d'alimentation ($U_E$), le point initial de ce montage série et chaque point de jonction entre deux résistances sont reliés à la première borne du contact de mise en circuit sous gaz protecteur (S1 ... Sn) correspondant, et les secondes bornes desdits contacts entre elles, caractérisé par le fait que le point de jonction commun (A) des secondes bornes (B) des contacts de mise en circuit sous gaz protecteur (S1 ... Sn) est relié à la masse à travers une résistance fixe ($R_0$) et sert de borne pour le prélèvement de la valeur de consigne.

0 070 460

Fig. 1

Fig. 2

7

Fig. 3